# EUROPEAN PATENT APPLICATION

(11) **EP 3 211 603 A1**
(43) Date of publication of application: **30.08.2017**
(21) Application number: 15853238.2
(22) Date of filing: 09.02.2015
(51) Int. Cl.: G06T 19/00

(54) **AUGMENTED REALITY SYSTEM**

(30) Priority: 20.10.2014 JP 2014213330; 03.02.2015 JP 2015018936
(71) Applicant: Katori, Yoshiyuki, Katori-shi, Chiba 289-0407 (JP)
(72) Inventor: Katori, Yoshiyuki, Katori-shi, Chiba 289-0407 (JP)
(74) Representative: Mötteli-Mantelli, Novella
(86) International application number: PCT/JP2015/053507
(87) International publication number: WO 2016/063554

(57) **Abstract**

[Problem] To provide an augmented reality system that is capable of obtaining information regarding a deceased person together with information in reality at a memorial installation.

[Solution] An augmented reality system of the invention has a server 50 that can communicate with a portable terminal 10 equipped with a camera 11. The server 50 has a deceased information storage part 60 that stores information regarding a deceased, and a control part 51 that transmits and receives information to and from the portable terminal 10. When a predetermined marker 2 installed to the memorial installation is captured by the camera 11, the portable terminal 10 transmits predetermined information to the server 50, based on information contained in the marker 2. The control part 51 of the server 50 which received the predetermined information transmits, to the portable terminal 10, the information regarding the deceased stored in the deceased information storage part 60. The portable terminal 10, upon receiving the information regarding the deceased, displays on a screen 13 the information regarding the deceased superimposed on the video captured by the camera 11.

## Description

### Technical Field

Present invention relates to an augmented reality system for displaying predetermined information sent from a server superimposed on a video captured by a camera on a screen of a terminal by either installing a marker to a memorial installation which is built to console spirit of a deceased and capturing the marker by the camera of the terminal, or by storing location information of a place where a memorial service is held and recognizing that the terminal is present at the memorial place.

### Background Art

An augmented reality system for displaying information such as characters, images and such superimposed on a captured video on a portable terminal equipped with a camera is known. The augmented reality system is used, for example, in car navigation systems and games as well as in systems for displaying product information and the likes.

In the augmented reality system, a shape of a marker is read by the portable terminal by capturing a predetermined marker by the camera of the portable terminal, and the portable terminal identifies the marker from its shape to request a predetermined server to transmit information according to the identified information. Upon receiving the request for transmitting information, the server transmits predetermined information to the portable terminal so that the information sent from the server is displayed superimposed on a video captured by the camera of the portable terminal. As an example of such augmented reality system, an invention in patent literature 1 is disclosed.

### Citation List

### Patent Literature

Patent Literature 1: Official Gazette of JP Patent Publication No. 2012-215989

### Summary

### Problem to be solved

Conventionally, memorial installations such as graves, Buddhist altars and Buddhist tablets are built to commemorate the deceased and to comfort souls of the deceased. However, it would be able to strengthen the feelings for the deceased even more if it is possible to see and hear messages that were left by the deceased before they die and information regarding the deceased in front of the memorial installations. Here lies the reason the augmented reality system is longed for to be applied to the memorial installations. Further, in recent years, there are ways to bury cremated remains without the use of gravestones such as kaiyousou (scattering cremated remains in the sea) and jyumokusou (burials which a tree is planted instead of a gravestone). In such cases, the memorial services are conducted at the locations of burial since there are no memorial installations, however to be able to see and hear information regarding the deceased at the locations of memorial services is hoped for all the same.

The invention is invented reflecting on the problems mentioned above, and aims to provide an augmented reality system capable of obtaining information regarding the deceased together with information in reality at the memorial installation or memorial place.

### Means to solve the Problem

To solve the above mentioned problem, an augmented reality system according to an invention of claim 1 is an augmented reality system comprising a server capable of communicating with a portable terminal equipped with a camera,
the server having a deceased information storage part for storing information regarding a deceased, a location information storage part for storing location information of a memorial place and a control part for transmitting/receiving information to and from the portable terminal,
and the portable terminal having a location detecting part for detecting location of the terminal itself and a transmitting/receiving part for transmitting information including the information of the location detected by the location detecting part as well as for receiving information from the server,
wherein if the location of the terminal itself detected by the location detecting part corresponds to the location information of the memorial installation stored in the location information storage part, the control part of the server transmits the information regarding the deceased stored in the deceased information storage part to the portable terminal for displaying the information regarding the deceased on a screen of the portable terminal which received the information regarding the deceased, superimposed on a video captured by the camera.

According to the invention of claim 1, it becomes possible to display the information regarding the deceased superimposed on the video of the memorial place captured by the camera, based on the location information detected by the portable terminal.

Further, in the augmented reality system according to an invention of claim 2, the control part of the server is configured to judge that the location of the terminal itself matches the location information of the memorial place if the location of the terminal itself detected by the location detecting part of the portable terminal is within a predetermined range from the location of the memorial place stored in the location information storage part.

In the invention according to claim 2, the information can be viewed for sure even when there is a certain degree of error in the location of the terminal itself detected by the location detecting part.

Further, the augmented reality system according to an invention of claim 3 is comprised of a marker installed at the memorial place, and when the marker is captured by the portable terminal, the server receives the location information detected by the location detecting part from the portable terminal and stores the received location information in the location information storage part.

In the augmented reality system according to claim 3, the present system can be applied even in cases when installation of the marker at the memorial place is difficult since the marker is used when viewing the information for the first time only, and from then on, the use thereof can be dispensed with.

Further, the augmented reality system according to an invention of claim 4 is an augmented reality system comprising a server capable of communication with a portable terminal equipped with a camera,
the server having a deceased information storage part for storing information regarding the deceased and a control part for transmitting and receiving information to and from the portable terminal,
wherein by capturing a marker installed to the memorial installation by the camera, the portable terminal transmits predetermined information to the server based on the information contained in the marker, and the control part of the server which received predetermined information transmits the information regarding the deceased stored in the deceased information storage part, and the portable terminal which received the information regarding the deceased displays the information regarding the deceased superimposed on a video captured by the camera on its screen.

According to the invention according to claim 4, it becomes possible to display the information regarding the deceased superimposed on the video captured at the memorial installation by the camera

Further, in the augmented reality system according to an invention of claim 5, more than one set of information to be displayed on the portable terminal are included in the information regarding the deceased which is stored in the deceased information storage part, and the control part transmits one set among the sets of information regarding the deceased to the portable terminal.

According to the invention of claim 5, various information can be viewed according to conditions such as the user using the system and the period the system is used, which gives variations to the messages from the deceased.

Moreover, in the augmented reality system according to an invention of claim 6, information on conditions of transmitting the information regarding the deceased is stored in association with the information regarding the deceased in the deceased information storage part.

According to the invention according to claim 6, the information regarding the deceased can be sent according to the various conditions.

Moreover, in the augmented reality system according to an invention of claim 7, the information regarding the deceased is stored in association with the information for identifying the marker in the deceased information storage part.

According to the invention of claim 7, an appropriate information regarding the deceased can be sent based on the information received from the portable terminal.

Further, in the augmented reality system according to an invention of claim 8, the server is provided with a user information storage part for storing information regarding a user and an authentication part for performing an authentication of a user who logged in referring to the user information storage part, wherein the control part is configured to transmit one set of information among the information regarding the deceased to the portable terminal based on the user authenticated by the authentication part.

According to the invention of claim 8, an appropriate information regarding the deceased can be sent based on the user who logged in.

Further, in the augmented reality system according to an invention of claim 9, the portable terminal is comprised of a location detecting part for detecting a location of the terminal itself, wherein when the marker is captured by the camera, the portable terminal detects the location of the terminal itself by the location detecting part and transmits predetermined information including the information of the detected location to the server, and the server is provided with a location information storage part for storing the information of location detected in association with the information of the user when the marker is captured by the camera of the portable terminal.

According to the invention of claim 9, it is possible for the server to grasp the location of the memorial installation that the user visits.

Further, in the augmented reality system according to an invention of claim 10, the portable terminal transmits the information of the location of the terminal itself detected by the location detecting part to the server at predetermined timing,
and the control part compares the information of the location received from the portable terminal and the information of the location stored in the location information storage part and transmits the information to the portable terminal if a distance between the two locations is smaller than a predetermined distance.

According to the invention of claim 10, when the user is visiting a place near the memorial installation, it is possible to notify the user that the memorial installation is nearby and remind the user to pay a visit.

Moreover, in the augmented reality system according to an invention of claim 11, the control part transmits the information of the location associated with the information of the user to a terminal of the user or other terminal based on the request from the user.

According to the invention of claim 11, it is possible to convey the place of the memorial installation to others and companies easily.

Further, in the augmented reality system according to an invention of claim 12, the server is comprised of a company information storage part for storing information of a company that provides services and a place of the company in association with one another,
wherein the portable terminal is configured so that it can transmit information of service request along with the information of the location of the terminal itself detected by the location detecting part to the server, and the control part of the server which received the information on the service request selects information of a company closet from the location of the portable terminal from the company information storage part and transmits the selected information to the portable terminal.

According to the invention of claim 12, it is possible to request the service to the company nearest to the user to enhance convenience.

Further, in the augmented reality system according to an invention of claim 13, the control part transmits first confirmation information, which can be responded to a first user at a predetermined timing, and transmits second confirmation information to a second user different from the first user if there is no response from the portable terminal for the first confirmation information within a predetermined period.

According to the invention of claim 13, it is possible to perform safety confirmation of the user and thereby succession of account can be conducted in a smooth manner.

### Effect of the Invention

According to the augmented reality system of the invention, the information regarding the deceased can be displayed superimposed on the video of the memorial installation and the memorial place captured by the camera, thereby one can conduct a memorial service to comfort the deceased with a stronger feeling at the memorial installation and the memorial place.

### Brief Description of the Drawings

Fig. 1 is a schematic diagram of the augmented reality system according to the invention.
Fig. 2 is a configuration diagram of the augmented reality system.
Fig. 3 is a diagram showing the management screen.
Fig. 4 is a flowchart of viewing the information according to the augmented reality system at the memorial installation.
Fig. 5 is a diagram of a screen of the portable terminal displaying the pattern information superimposed on the video captured by the camera.
Fig. 6 is a diagram of a screen which is displayed when pressing an icon of a gravestone on a banner.
Fig. 7 is a schematic diagram of the augmented reality system according to the second embodiment.
Fig. 8 is a flowchart for viewing the information at the memorial place according to the augmented reality system of the second embodiment.

### Description of Embodiments

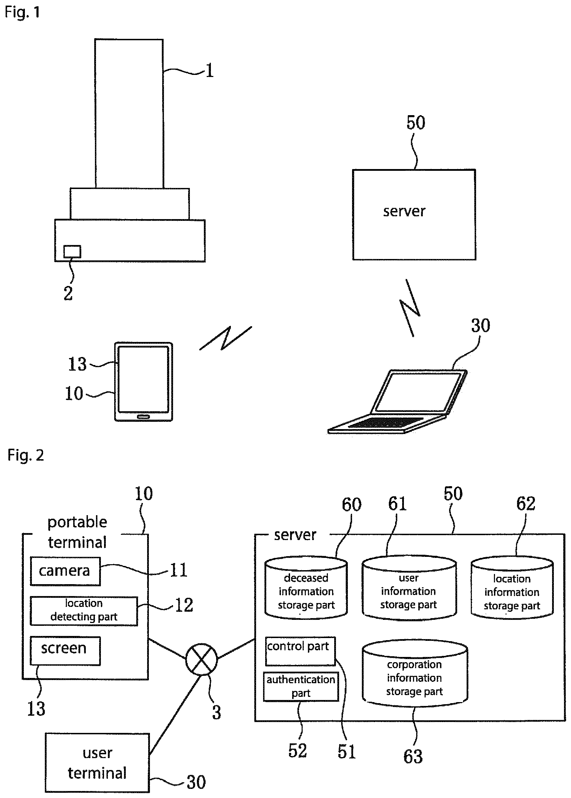

Embodiments of the invention will be recited and described in detail herein below referring to the attached drawings. Fig. 1 shows a schematic diagram of the augmented reality system according to the present embodiment. In the augmented reality system of the present embodiment, a marker 2 is installed to a memorial installation 1 such as grave, Buddhist altar and Buddhist tablet, and the marker 2 is captured by a portable terminal 10 equipped with a camera 11, thereby information is transmitted and received to and from the portable terminal 10 and a server 50, and information regarding a deceased received by the portable terminal 10 is displayed superimposed on a video captured by the camera 11 on a screen of the portable terminal 10. In Fig. 1, the marker 2 is installed to a grave.

In addition to above, a user terminal 30 is provided to the augmented reality system of the present embodiment for registering information regarding the deceased and such in the server 50. The user terminal 30 can be comprised of various computers. However, registration of information can be performed from the portable terminal 10 instead of the user terminal 30.

In Fig. 2, a configuration diagram of the augmented reality system is illustrated. The portable terminal 10 is comprised of a camera 11 capable of capturing videos, a location detecting part 12 capable of measuring the location of the terminal itself on the globe using GPS (Global Positioning System) and the likes, and a screen for displaying information. The portable terminal 10 can be comprised of smartphone, tablet type computer, notebook type computer and the likes, and functions of the present system can be realized by a software installed therein.

The server 50 can communicate with the portable terminal 10 via network 3. Further, the user terminal can also communicate with the server 50 via the network 3. In Fig. 2, it can be observed from the drawing that the portable terminal 10, server 50 and the user terminal 30 is connected using wire, but in fact the communication can be performed wireless, and the portable terminal, in particular, is connected to the network 3 wirelessly.

The server 50 is comprised of a deceased information storage part 60 for storing information regarding a deceased, a user information storage part 61 for storing information specific to the user and types in association with one another, a location information storage part 62 for storing location information sent from the portable terminal 10 and a company information storage part 63 for storing information of companies such as florists and gravestone companies. Further, the server 50 is comprised of a control part 51 for transmitting and receiving information to and from the portable terminal 10 and an authentication part 52 for authenticating users by ID and password. The control part 51 and the authentication part 52 of the server 50 can be physically comprised of CPU (Central Processing Unit) of a computer and the likes. Further, respective storage parts can be physically comprised of storage devices such as hard disc of computer.

Next, a configuration of accounts in the present system is described. In the present system, a plurality of accounts of different types can be made, and a propriety of registering information, a type of information allowed to view and such can be set individually based on the type of account. The types of account in the present system are a main account, subaccount, friend account and public account. However, the types of account are not limited to the ones mentioned above, and it is possible to have more types of account.

The main account is an account that can register information in the server 50, and it is necessary to create one or more main account. A user of the main account can be the one who wants to leave information that one wishes for one's children and friends after one's death, or one's child or the likes in case the person is already deceased. The user of the main account has a full authority not only to register information but also to view information and to set conditions of the present system.

The subaccount is an account with at least a part of the authority limited. The user of the main account can set which authority to limit and which authority to permit to the subaccount. All authority can be passed on to the user of the subaccount after the death of the concerning person. It is perceivable to have a child or a friend of the deceased to be the user of the subaccount. It is possible to create a plurality of subaccounts.

The friend account is an account of which user is assumed to be a friend other than the family of the deceased. The friend account is only permitted to view information by the augmented reality, and is not permitted an authority to register information. It is possible to create a plurality of friend accounts as well. The public account is an account which can be logged in only by a password, and in case the deceased is a celebrity, for example, the password can be disclosed to an unspecified large number of public to enable viewing of the information by the augmented reality.

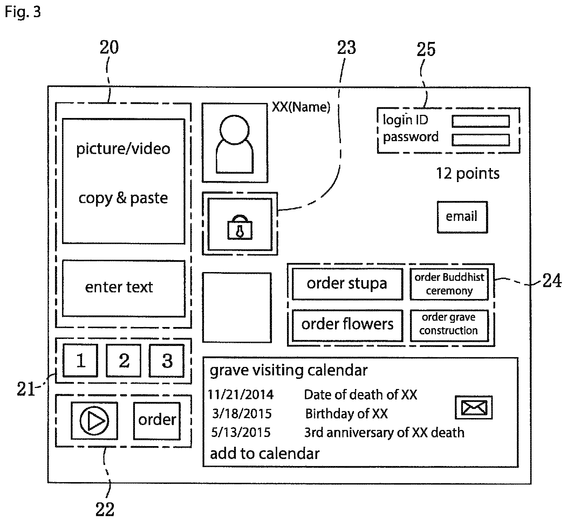

Next, registration of information regarding the deceased to the present system is described. The registration of information is performed from the user terminal 30. In doing so, uploading of information and setting of conditions can be performed in the management screen as disclosed in Fig. 3. The management screen can be logged in at least by the user of the main account. However, the user of the subaccount can login to the management screen depending on the setting. At the upper right part of the management screen, a login region 25 is provided for entering an ID and a password of the account, and by entering the ID and the password here, it is possible to login to the management screen from the account.

When logged in to the management screen, a data entering region 20 for entering the information regarding the deceased and uploading it to the server 50 is provided. Further, in the data entering region 20, there is a region for copying and pasting photographs, videos and such, and a region for entering text data. One can freely combine respective data from videos, photographs, audios and text data to form one set of information as the information regarding the deceased. A data entered in the data entering region 20 is sent to the server 50 from the user terminal 30. The data received at the server 50 is stored in the deceased information storage part 60.

On the management screen, a pattern selecting region 21 is provided below the data entering region.20. A plurality of buttons is aligned in the pattern selecting region 21, and each of the respective buttons corresponds to a pattern of data. Upon viewing the information by the augmented reality, a plurality of information such as videos, photographs and text data is displayed as a single set of information. In the present system, such single set of information can be saved as a single pattern, and it is possible to register a plurality of such patterns. In the pattern selecting region 21, one pattern can be selected among the plurality of patterns. By entering data in the data entering region 20 in a state of selecting one pattern in the pattern selecting region 21, those information is stored in the deceased information storage part 60 of the server 50 in association with the pattern.

A pattern selected in the pattern selecting region 21 can be used separately for each memorial installation, in other words, each for the grave, Buddhist altar and Buddhist tablet, or it can also be used separately for each user, in other words, each for the subaccount, friend account and public account. Associations involved in such uses are explained later.

In the management screen, a play/order region 22 is provided below the pattern selecting region 21. In the play/order region 22, a registered information can be viewed by pressing a play button. At the time of viewing, information corresponding to a selected pattern is selected from the deceased information storage part 60 stored in the server 50, and by transmitting it to the user terminal 30, it is possible to confirm how it is actually displayed on the screen with the user terminal 30.

Further, by pressing an order button, a marker 2 including the information for playing the registered information can be ordered for production. When the press button is pressed, an identification code such as barcode which includes information for identifying the selected pattern is created at the server 50, and a system administrator can produce the marker 2 from the created identification code. It is only necessary for the marker 2 to be able to be identified to which memorial installation it corresponds, and to be able to be recognized by its specific shape with the portable terminal 10, and hence a simpler shape and the likes can be used apart from the barcode.

On the management screen, a condition setting region 23 is provided on the right side of the data entering region 20. In the condition setting region 23, conditions for viewing the registered patterns can be set. By clicking on the condition setting region 23 on the management screen, another setting screen (not shown) is displayed where conditions can be entered.

Various things can be considered as the conditions for viewing to be set in the condition setting region 23. If the account is set as a condition for viewing, it is possible to permit the viewing to only a specific account, or to permit the viewing to multiple accounts. For example, let's assume in a family comprised of a father, mother and 3 children, the father and mother each possess main account and the 3 children possess subaccounts. In this case, the condition can be set to permit the viewing only to the mother's main account for the information pattern registered on the father's main account. The condition can be also set to permit the viewing to the mother's main account and the subaccounts of the 3 children. As for the other information patterns, it is also possible to set the condition to permit the viewing to the friend account or to the public account.

Further, it is possible to set a period as a condition of viewing. For instance, by setting a period of 5 days before and after O-bon festival (a Japanese ancient festival for the worship of ancestors), people who visit the grave during that period can view the information pattern. It is also possible to combine the conditions for the period and the account. For example, assuming that a grandchild possesses a subaccount, a message to congratulate the grandchild's coming of age can be registered as an information pattern and the conditions can be set to a predetermined period before and after the grandson's 20th birthday.

Further, a condition of which place the pattern is to be viewed is also included as the condition to be set in the condition setting region 23. For instance, if the marker 2 is installed to the grave and a Buddhist tablet at home, specific pattern can be set to be viewed at the grave, and another specific pattern can be set to be viewed at the Buddhist tablet at home. These conditions based on the account, period and place can be set individually or a plurality of the conditions can be combined.

When the condition for viewing is set in the condition setting region 23, such setting information is sent to the server 5, and the registered information pattern and the condition set thereto are stored in association with each other in the deceased information storage part 60 at the server 50.

In the management screen, a service ordering button region 24 is provided below the condition setting region 23. In the service ordering button region 24, a plurality of buttons for requesting various services in relation to the grave and Buddhist memorial service are provided. Buttons for requesting various services can be provided in this region, but in the present embodiment, buttons for ordering stupa making, ordering Buddhist memorial services, ordering flowers and ordering construction of graves are provided. When these buttons are clicked, either the information is sent to the server directly, or a form for entering information necessary for placing the order appears and after completing the entry of the necessary information for placing the order, the information is then sent to the server 50.

As for the form for entering information necessary for placing the order, it can be displayed with the information already known at the server 50 entered in advance. For instance, in the user information storage part 61 of the server 50, since the name and the address of the user are stored in association with the account of the user, when the button for ordering flowers is pressed, the name and the address corresponding to the logged in account are sent to the user terminal 30 from the server 50 as a name and an address of the ordering person, and that information can be entered preliminary in the user terminal 30.

When the necessary information is entered on the form and the information is transmitted to the server 50, the information is then sent to the company. The information on the companies is stored in the company information storage part 63 of the server 50 as already explained. To which company to place an order can be determined in advance based on the address of the user, or it can also be configured to be selectable by the user at the time of order.

In the management screen, other than the regions that have already been explained, a region is provided where dates related to grave visiting is displayed. The dates related to grave visiting are, for example, the date of death of the deceased, the date of Buddhist memorial service, the date of Equinoctial week and such, and dates can be added from the management screen. Further, an email icon is provided on the right side of the dates, and by clicking on the icon, it is possible to set the system so that an email is sent to a predetermined address from the server 50 when the dates are drawing near. The respective information on setting is sent to the server 50, and the server 50 transmits an email based on that information on setting.

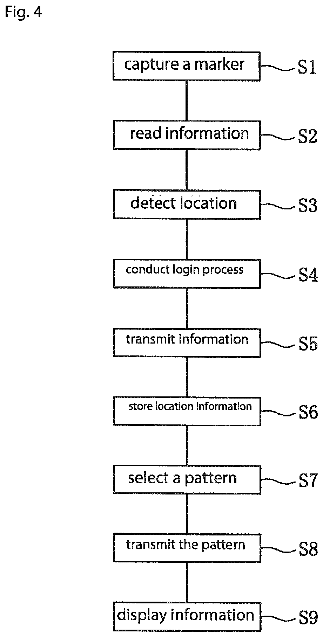

Next, the viewing of the information according to the augmented reality at the memorial installation is described. In Fig. 4, a flowchart of viewing the information according to the augmented reality at the memorial installation is shown. As already explained, the marker 2 for viewing the information is installed to the memorial installation. The user starts a software for operating the present system on the portable terminal 10 in advance, and photographs the marker 2 provided on the memorial installation by the camera 11 of the portable terminal 10 (S1).

The portable terminal 10 which captured the marker 2 identifies the marker 2 or recognizes the information contained therein by recognizing the shape of the marker 2 (S2). The portable terminal 10 detects the location of the terminal itself by the location detecting part 12 (S3). The location of the portable terminal 10 detected at this step can be used as information of the location where the memorial installation is installed.

Next, the portable terminal 10 proceeds to a login process to the server 50 (S4). In the login process, a login ID of the user and a password can be entered from the portable terminal 10, or it can be simplified by using an ID specific to the portable terminal 10 as the login ID. In case of the public account, it is possible to login to the server 50 only by entering the password.

The login ID and the password entered from the portable terminal 10 are sent to the server 50 and the user information storage part 61 in the authentication part 52 is referred at the server 50 to determine whether the login ID and the password match.

After the portable terminal 10 is logged in to the server 50, the portable terminal 10 transmits predetermined information to the server 50 (S5). The predetermined information sent in this step includes the information for identifying the marker 2 and the information of the location of the portable terminal 10 detected in S3.

The server 50 that receives the information from the portable terminal 10 stores the location information included in the information received in the location information storage part 62 (S6). Here, the location information is stored in association with the account of the logged in user. Such location information can be used as information on the place of memorial installation that the user visits.

Next, the control part 51 selects a pattern from the deceased information storage part 60 that matches the account logged in and the information for identifying the marker 2 (S7). Since it can be determined from the marker 2 at which memorial installation it was captured, the information corresponding to the memorial installation can be selected from the deceased information storage part 60. Further, by identifying the type of account logged in, i.e. whether it is a main account, subaccount, friend account or public account by referencing the user information storage part 61, a pattern that corresponds to that account type can be selected.

Further, a condition set for the selected pattern is determined whether it matches the user and period of viewing the information. As explained above, the pattern of information stored in the deceased information storage part 60 is associated with conditions such as users and periods permitted for viewing. At the control part 51, the selected pattern is determined whether it is associated with the condition that the currently logged in user is permitted to view. For example, it can be configured that if 2 patterns of messages, a normal message and a message for a limited period, are selected for a subaccount, and if the date logged in is within the set period, the message for a limited period is sent to the portable terminal 10. Contrarily, if the date logged in is not within the set period, it can be configured that the normal message is sent to the portable terminal 10. In case the viewing is further limited to some users among the subaccount users, the corresponding pattern is sent to the portable terminal 10 only when the server 50 is logged in from the accounts of those users.

In case there are multiple patterns that match the condition, any one of the patterns can be randomly sent or if order of priority is determined in advance, the pattern to be sent can be decided based on the order of priority.

When the pattern to be sent to the portable terminal 10 is decided, the control part 51 transmits the information of the pattern to the portable terminal 10 (S8). The portable terminal 10 which received the information of the pattern displays the information of the pattern superimposed on the video captured by the camera 11 on the screen 13 (S9).

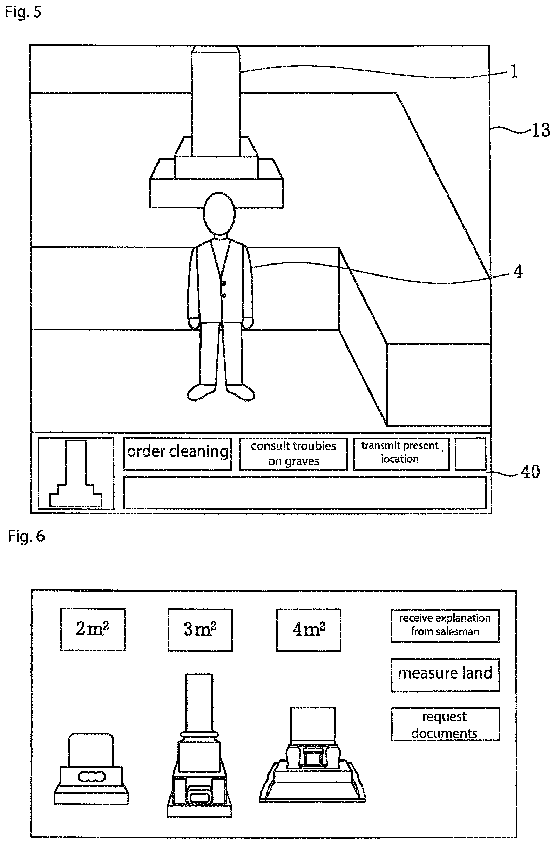

In Fig. 5, the screen 13 of the portable terminal 10 displaying the information of the pattern superimposed on the video captured by the camera 11 is shown. In this diagram, it is shown that a photograph 4 of the deceased is displayed superimposed while capturing the grave of the memorial installation 1. At the same time, the message from the deceased is reproduced by audio in the process. The image is displayed substantially on full screen of the screen 13, but a banner part 40 is displayed at the lower part of the screen 13.

The information of the pattern that overlaps on the video is a photograph and an audio in Fig. 5, but as already mentioned, various combinations of data can be considered. For instance, it can be a combination of a video and an audio or a photograph and a text message. In case of displaying a text message, it is possible to display a balloon from the photograph of the deceased, and to display the text message inside the balloon.

On the banner part 40, a grave icon and respective buttons for ordering cleaning of the grave, consulting troubles related to the grave and transmitting current location are provided. Upon pressing the grave icon, a screen for selecting graves appears as will be described below. Upon pressing the buttons for ordering cleaning of the grave and consulting troubles related to the graves, such information is sent to the server 50, and at the server 50, the information of the companies corresponding to each service is selected from the company information storage part 63 and contact is made to the companies for each order from the server 50. Further, by pressing a button for transmitting current location, the information of the location detected by the location detecting part 12 can be passed on to software such as SMS. Whether to include the respective buttons can be selected arbitrary. Other types of button such as a button for ordering flowers can be also provided.

When placing an order to a company, the company can be selected using the location information detected by the location detecting part 12 of the portable terminal 10. As described above, the location information detected by the portable terminal 10 is included in the information that the server 50 receives from the portable terminal 10. Hence, when the button for placing an order to the company is pressed and such information is sent to the server 50 from the portable terminal 10, it can be configured so that the control part 51 in the server 50 selects the information of the company nearest to the location detected by the portable terminal 10 from the company information storage part 63, and transmits the information of the company to the portable terminal 10. It is possible to further enhance convenience by such configuration, as the company situated nearest to the user using the portable terminal 10 is selected.

On the banner part 40, a region that can be used arbitrary is also provided in which advertisements and the likes can be displayed or, for example, a button for displaying knowledge about grave visiting can be provided.

In Fig. 6, a screen displayed when the icon of grave on the banner part 40 is pressed is shown. This screen is provided with a function useful for those who are considering of buying graves. As a premise for such use, a sign with the marker 2 is placed at a vacant land of the graveyard in advance. By capturing the marker 2 by the camera 11 of the portable terminal 10, an image of a grave can be displayed superimposed on a video of the land.

On the left side of the screen, a size of the land and an image of the grave that corresponds to the size of the land are displayed. On the right side of the screen, a button for receiving explanations from a salesman, a button for measuring the size of the land and a button for requesting documents are provided. By pressing the button for receiving explanations from a salesman and capturing the marker 2 of the vacant land by the camera 11, such information is sent to the server 50 and information including an image of the salesman giving explanations on the grave is sent from the server 50 to the portable terminal 10. On the portable terminal 10 which received the information, the image of the salesman giving explanation on the grave is displayed superimposed on the video of the land.

The button for measuring a size of the land starts a software for measuring the size of the land using the camera 11. The image of the grave displayed on the screen can be selected based on the size of the land measured thereby. Further, by pressing the button for requesting documents, such information is sent to the server 50 and the documents can be sent to the address or such of the user based on the registered information of the user.

The marker 2 installed to the grave can be just one, but a plurality of markers can be also used. By installing a plurality of markers 2, different messages can be played for different people visiting the grave. The marker 2 can be embedded to a newly built grave, whereas for a grave already built, a piece embedded with the marker 2 can be prepared to be attached to the grave.

Further, on an epitaph engraved with names of people buried in the grave, the marker 2 can be embedded below each posthumous Buddhist name. In this case, each marker 2 can include information to display an image of the person that corresponds to each posthumous Buddhist name.

Next, how points are provided in the present system are described. Points can be provided to the logged in user when the marker 2 is read by the portable terminal 10. For example, when the marker 2 installed to the Buddhist tablet of the memorial installation is read by the portable terminal 10 and such information is received by the server 50, a point is given to the user by the server 50. To be specific, information on points is stored in association with the account of the user in the user information storage part 61 of the server 50, and when the server 50 provide a point to the user, the point is added to the points associated with the user account. When the points are accumulated to a predetermined score, the user can order gifts such as book vouchers and incense sticks from the management screen.

Now, how a succession of the account is conducted is described. In the present system, it is assumed that a holder of the main account is the person who is to be viewed by the augmented reality. Hence, a problem of how the account is succeeded by other users of the subaccount or by one's family will arise when the person dies.

In view of above, in the present system, a predetermined email is sent to an email address registered for the main account from the server 50 on a regular basis as a confirmation information that can be replied. The holder of the main account is determined to be alive if a reply is received within a predetermined period from the date the email is sent. In case a reply is not received within a predetermined period from the date the email is sent, a predetermined email is sent to an email address registered for another account, for example the subaccount, as a confirmation information that can be replied. If it became apparent that the holder of the main account has deceased from the reply received for the email, the succession of the account is conducted in a predetermined procedure. For example, the succession of the account can be conducted by informing the password of the main account to a predetermined successor such as the person's child.

Next, a service of the present system that utilizes the location information is described. As described above, when the marker 2 is read by the portable terminal 10, the portable terminal 10 transmits the information of the location detected by the location detecting part 12 along with the information of the marker 2 to the server 50, and the server 50 stores the information in association with the user account in the location information storage part 62. In other words, a place of the memorial installation where the user pays visit can be recognized by the server 50.

The portable terminal 10 in which the software of the present system is installed transmits the information of the location detected by the location detecting part 12 to the server 50 on a regular basis. Upon receiving the information of the location from the portable terminal 10, the server 50 selects the place of the memorial installation which the user who sent the information pays visit, referring to the location information storage part 62. A distance between the place of the memorial installation and the location of the portable terminal 10 received is calculated, and if the distance between the 2 is smaller than a predetermined distance, the server 50 transmits information to suggest visiting of the memorial installation to the portable terminal 10. This information can be notified on the software installed to the portable terminal 10, or can be notified by sending an email.

As for the location of the graves, addresses are often not designated to each grave, and except for graveyards with section numbers allocated such as cemeteries, it was necessary to ask related people for the place of each grave. It was inconvenient for companies who maintain the graves since they had to ask the place of each grave for each client.

In the present system, since the information of the location of the terminal itself is also sent along when the user reads the marker 2 by the portable terminal 10 and transmits the information to the server 50, the location of the grave that the user is visiting can be identified. Therefore, by displaying the information of the user's account stored in the location information storage part 62 and the location information in correlation to each other on a map, a map of a grave can be made. Thereby, the administrator of the system is able to grasp each location without asking for the location of each one of them by referring to the maps of the graves.

Further, to an extent approved by the user, the location of the grave can be informed to others such as users using the present system. For example, when a friend wants to visit the grave, it is normally necessary for the friend to ask the place of the grave to the family or the likes. However, in the present system, it is possible to register a contact address of the friend in advance and transmit the information of the location of the grave to the contact address when the person died. With this configuration, when any one of the users captures the marker 2 at the grave and transmits the location information to the server 50, the location of the grave can be grasped by the server 50, and the location information can be sent to the registered friend.

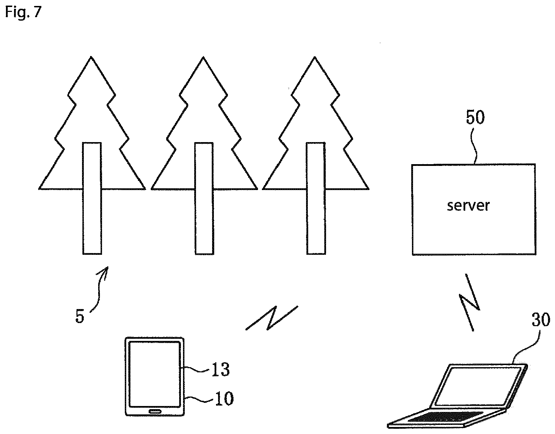

Next, the second embodiment of the invention is described. In Fig. 7, a schematic diagram of the augmented reality system according to the second embodiment. The augmented reality system according to the second embodiment is configured as a system without the need of a marker. In case of burials such as kaiyosou and jyumokusou, though memorial installations like graves are not installed, the places of burials are visited for memorial services. According to the present embodiment, information can be displayed and played by the augmented reality at the places of memorial services even in these cases.

In the present embodiment, as shown in Fig. 7, a place that the jumokusou was conducted is referred as a memorial place 5. By transmitting and receiving information between the portable terminal 10 and the sever 50 at the memorial place 5, the information regarding the deceased can be displayed and played superimposed on the video captured by the camera 11 of the portable terminal 10. Configurations of the portable terminal 10, server 50 and user terminal 30 are similar to the first embodiment shown in Fig. 2.

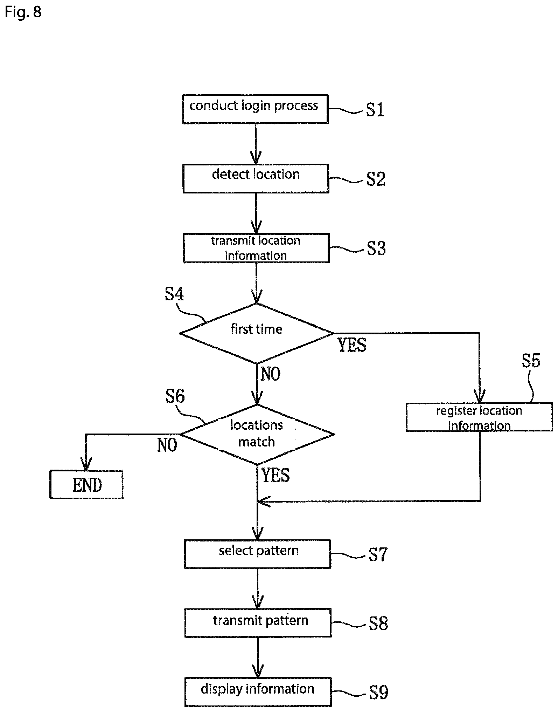

To configure a system of augmented reality without the use of a marker, the location information acquired by the portable terminal 10 is used in the present embodiment. In Fig. 8, a flowchart for viewing the information by the augmented reality at the memorial place 5 according to the present embodiment is shown. Here, it is assumed that the location information of the memorial place 5 is not yet registered in the server 50.

Upon arriving at the memorial place 5, a user starts the software used for the present system on the portable terminal 10 and login processing is conducted (S1). The login processing conducted in this step is the same as S4 in Fig. 4. Next, the portable terminal 10 detects a location of the terminal itself by the location detecting part 12 (S2). Following the process, information including the location information is sent to the server 50 from the portable terminal 10 (S3). In this step, information for identifying the memorial place is included in the information sent to the server 50, together with the location information. The information to identify the memorial place 5 is registered or selected in advance on the software of the portable terminal 10.

Upon receiving the location information from the portable terminal 10, the server 50 determines whether it is the first time to receive the location information of that memorial place 5 (S4). If it is the first time to receive the location information, the server 50 stores the location information in the location information storage part 62 (S5). The location information is stored in association with the information to identify the memorial place 5.

In case it is not the first time to receive the location information of the memorial place 5 in S4, the control part 51 compares the location information of the memorial place 5 stored in the location information storage part 62 and the location information received from the portable terminal 10 and determines whether these locations match one another (S6). In this step, if the location of the terminal detected by the portable terminal 10 is within a predetermined range from the location of the memorial place 5 stored in the location information storage part 62, these location information are judged to match.

If the location information do not match in S6, the portable terminal 10 is judged to be not present at the memorial place 5 and the flow ends there. If the location information match in S6, the pattern to be played is selected (S7), sent to the portable terminal 10 (S8) and the portable terminal 10 which received the pattern displays and plays the information of the pattern superimposed on the video captured by the camera 11 of the portable terminal 10 (S9) likewise in S7∼S9 of Fig. 4.

In the manner described above, even for the memorial place 5 which cannot be installed with a marker, the information of augmented reality can be sent and received based on the location information detected by the portable terminal 10. Accordingly, even for a person buried by kaiyosou and jyumokusou that cannot be installed with a marker, it becomes possible to view and hear information regarding the deceased such as messages left by the person before the person's death at the memorial place 5, and it would be able to strengthen one's feelings for the deceased. Moreover, even for the memorial installations like graves, there may be cases when the markers cannot be installed due to shapes or materials used or when it is not approved by the managers of the graves, or there may be cases when the users simply do not want to install the markers to the memorial installations. The augmented reality system according to the present embodiment can be applied for those cases as well. Further, since it is not necessary to photograph the marker 2 by the camera 11 of the portable terminal 10 in the present embodiment, angles of the portable terminal 10 can be adjusted freely which enables the augmented reality system with a higher degree of freedom.

The augmented reality system according to the present embodiment can be provided with additional functions likewise in the first embodiment. For example, it can be configured to transmit different information regarding the deceased to the portable terminal 10 based on conditions such as the types of account logged in and date of login. Further, it is possible to order services to the companies of various fields using the location information. It is also possible to add a function to provide explanation by a salesman for those interested in jyumokusou and the likes. In such case, the location information of the memorial place can be registered in the server 50 in advance so when the person interested in jyumokusou and the likes starts the software on the portable terminal 10 near the location, the image of the salesman can be displayed superimposed on the video captured by the camera 11. It can be also configured to display the image of the salesman superimposed on the video captured by the camera 11 even when the location information is not registered. Further, transmitting information to request documents and making phone calls for inquiries and such can be conducted from the software on the portable terminal 10, and in such cases, information can be sent to the neighboring companies based on the location information detected by the portable terminal 10. If the location detected by the portable terminal 10 is in the neighborhood of the memorial place 5, information to suggest visiting the memorial place 5 can be sent from the server 5.

Also, as a service utilizing the location information, the map information can be stored in the portable terminal 10 and navigation to the memorial place 5 can be conducted basing on the location information detected by the portable terminal 10 and the location information of the memorial place 5. Further, based on the location information of the memorial place 5, advertisements of the neighboring companies can be displayed on the portable terminal 10. In this case, it is necessary to store the advertisements of the companies and the location information of the companies in association to one another in the server 50.

It is also possible to use a marker in combination in the augmented reality system utilizing the location information. A schematic diagram for this case is the same as the one shown in Fig. 1. In this case, the marker 2 is used to transmit the location of the memorial place to the server in the first step. To be specific, when viewing the information by the augmented reality at the memorial place for the first time, S1∼S9 of Fig. 4 is conducted to store the location information of the memorial place in the server 50. From the second time on, the viewing of information by the augmented reality can be conducted by the flow excluding the steps of S4 and S5 in Fig. 8 (in other words, the flow for the second time on shown in Fig. 8).

As described above, in viewing the information of augmented reality using the location information, the marker 2 can be used simultaneously, and since the marker 2 can be installed temporarily and can be removed from the memorial place once the location is registered, even in cases when a permanent installation of the marker 2 is difficult, it is possible to use the present system.

The embodiments of the invention are described herein above, however it is to be understood that the application of the invention is not limited to the mentioned embodiments, and can be applied in various forms within the scope of technical ideas. The memorial installation 1 and memorial place 5 shall be recognized in a broader context, and for example, the invention can be applied to the memorial installations and memorial places for other than humans such as pets.

### <Numerical Indications>

- 1: memorial installation
- 2: marker
- 3: network
- 10: portable terminal
- 11: camera
- 12: location detecting part
- 13: screen
- 20: data entering region
- 21: pattern selecting region
- 22: play/order region
- 23: condition setting region
- 24: service ordering button region
- 25: login region
- 30: user terminal
- 40: banner part
- 50: server
- 51: control part
- 52: recognition part
- 60: deceased information storage part
- 61: user information storage part
- 62: location information storage part
- 63: company information storage part

## Claims

1. An augmented reality system comprising a server capable of communicating with a portable terminal equipped with a camera,
the server having a deceased information storage part for storing information regarding a deceased, a location information storage part for storing location information of a memorial place and a control part for transmitting and receiving information to and from the portable terminal, and
the portable terminal having a location detecting part for detecting location of the terminal itself and a transmitting/receiving part for transmitting information including the information of the location detected by the location detecting part as well as for receiving information from the server,
wherein, if the location of the terminal itself detected by the location detecting part corresponds to the location information of the memorial installation stored in the location information storage part, the control part of the server transmits the information regarding the deceased stored in the deceased information storage part to the portable terminal for displaying the information regarding the deceased on a screen of the portable terminal which received the information regarding the deceased, superimposed on a video captured by the camera.

2. The augmented reality system according to claim 1, wherein the control part of the server determines that the location of the terminal itself matches the location information of the memorial place if the location of the terminal itself detected by the location detecting part of the portable terminal is within a predetermined range from the location of the memorial place stored in the location information storage part.

3. The augmented reality system according to claim 1 or 2, wherein a marker is installed at the memorial place, and when the marker is captured by the portable terminal, the server receives the location information detected by the location detecting part from the portable terminal and stores the received location information in the location information storage part.

4. An augmented reality system comprising a server capable of communication with a portable terminal equipped with a camera,
the server having a deceased information storage part for storing information regarding the deceased and a control part for transmitting and receiving information to and from the portable terminal,
wherein by capturing a marker installed to the memorial installation by the camera, the portable terminal transmits predetermined information to the server based on the information contained in the marker, and the control part of the server which received predetermined information transmits the information regarding the deceased stored in the deceased information storage part, and the portable terminal which received the information regarding the deceased displays the information regarding the deceased superimposed on a video captured by the camera on its screen.

5. The augmented reality system according to one of claims 1 to 4, wherein more than one set of information to be displayed on the portable terminal are included in the information regarding the deceased which is stored in the deceased information storage part, and the control part transmits one set among the sets of information regarding the deceased to the portable terminal.

6. The augmented reality system according to claim 5, wherein information on conditions of transmitting the information regarding the deceased is stored in association with the information regarding the deceased in the deceased information storage part.

7. The augmented reality system according to claim 6, wherein the information regarding the deceased is stored in association with the information for identifying the marker in the deceased information storage part.

8. The augmented reality system according to claim 5 or 6, wherein the server is provided with a user information storage part for storing information regarding a user and an authentication part for performing an authentication of a user who logged in referring to the user information storage part, and the control part is configured to transmit one set of information among the information regarding the deceased to the portable terminal based on the user authenticated by the authentication part.

9. The augmented reality system according to claim 4, wherein the portable terminal comprising a location detecting part for detecting a location of the terminal itself, and when the marker is captured by the camera, the portable terminal detects the location of the terminal itself by the location detecting part and transmits predetermined information including the information of the detected location to the server, and the server is provided with a location information storage part for storing the information of location detected in association with the information of the user when the marker is captured by the camera of the portable terminal.

10. The augmented reality system according to one of claims 1 to 3 and 9, wherein the portable terminal transmits the information of the location of the terminal itself detected by the location detecting part to the server at predetermined timing, and
the control part compares the information of the location received from the portable terminal and the information of the location stored in the location information storage part and transmits the information to the portable terminal if a distance between the two locations is smaller than a predetermined distance.

11. The augmented reality system according to one of claims 1 to 3, 9 and 10, wherein the control part transmits the information of the location associated with the information of the user to a terminal of the user or other terminal based on the request from the user.

12. The augmented reality system according to one of claims 1 to 3 and 9 to 11, wherein the server is comprised of a company information storage part for storing information of a company that provides services and a place of the company in association with one another, and
the portable terminal is configured so that it can transmit information of service request along with the information of the location of the terminal itself detected by the location detecting part to the server, and the control part of the server which received the information on the service request selects information of a company closet from the location of the portable terminal from the company information storage part and transmits the selected information to the portable terminal.

13. The augmented reality system according to one of claims 1 to 12, wherein the control part transmits first confirmation information, which can be responded, to a first user at a predetermined timing, and transmits second confirmation information to a second user different from the first user if there is no response from the portable terminal for the first confirmation information within a predetermined period.

## Amended claims

### Amended claims under Art. 19.1 PCT

**1.** (Amended) An augmented reality system comprising a server capable of communicating with a portable terminal equipped with a camera,
the server having a deceased information storage part for storing information regarding a deceased, a location information storage part for storing location information of a memorial place and a control part for transmitting and receiving information to and from the portable terminal, and
the portable terminal having a location detecting part for detecting location of the terminal itself and a transmitting/receiving part for transmitting information including the information of the location detected by the location detecting part as well as for receiving information from the server,
wherein, if the location of the terminal itself detected by the location detecting part corresponds to the location information of the memorial installation stored in the location information storage part, the control part of the server transmits the information regarding the deceased stored in the deceased information storage part to the portable terminal for displaying the information regarding the deceased on a screen of the portable terminal which received the information regarding the deceased, superimposed on a video captured by the camera, and
the portable terminal transmits the information of the location of the terminal itself detected by the location detecting part to the server at predetermined timing, and
the control part compares the information of the location received from the portable terminal and the information of the location stored in the location information storage part and transmits the information to the portable terminal if a distance between the two locations is smaller than a predetermined distance.

**2.** The augmented reality system according to claim 1, wherein the control part of the server determines that the location of the terminal itself matches the location information of the memorial place if the location of the terminal itself detected by the location detecting part of the portable terminal is within a predetermined range from the location of the memorial place stored in the location information storage part.

**3.** The augmented reality system according to claim 1 or 2, wherein a marker is installed at the memorial place, and when the marker is captured by the portable terminal, the server receives the location information detected by the location detecting part from the portable terminal and stores the received location information in the location information storage part.

**4.** (Amended) An augmented reality system comprising a server capable of communication with a portable terminal equipped with a camera,
the server having a deceased information storage part for storing information regarding the deceased and a control part for transmitting and receiving information to and from the portable terminal,
wherein by capturing a marker installed to the memorial installation by the camera, the portable terminal transmits predetermined information to the server based on the information contained in the marker, and the control part of the server which received predetermined information transmits the information regarding the deceased stored in the deceased information storage part, and the portable terminal which received the information regarding the deceased displays the information regarding the deceased superimposed on a video captured by the camera on its screen, and
the portable terminal transmits the information of the location of the terminal itself detected by the location detecting part to the server at predetermined timing, and
the control part compares the information of the location received from the portable terminal and the information of the location stored in the location information storage part and transmits the information to the portable terminal if a distance between the two locations is smaller than a predetermined distance.

**5.** The augmented reality system according to one of claims 1 to 4, wherein more than one set of information to be displayed on the portable terminal are included in the information regarding the deceased which is stored in the deceased information storage part, and the control part transmits one set among the sets of information regarding the deceased to the portable terminal.

**6.** The augmented reality system according to claim 5, wherein information on conditions of transmitting the information regarding the deceased is stored in association with the information regarding the deceased in the deceased information storage part.

**7.** The augmented reality system according to claim 6, wherein the information regarding the deceased is stored in association with the information for identifying the marker in the deceased information storage part.

**8.** The augmented reality system according to claim 5 or 6, wherein the server is provided with a user information storage part for storing information regarding a user and an authentication part for performing an authentication of a user who logged in referring to the user information storage part, and the control part is configured to transmit one set of information among the information regarding the deceased to the portable terminal based on the user authenticated by the authentication part.

**9.** The augmented reality system according to claim 4, wherein the portable terminal comprising a location detecting part for detecting a location of the terminal itself, and when the marker is captured by the camera, the portable terminal detects the location of the terminal itself by the location detecting part and transmits predetermined information including the information of the detected location to the server, and the server is provided with a location information storage part for storing the information of location detected in association with the information of the user when the marker is captured by the camera of the portable terminal.

**10.** (Amended) The augmented reality system according to one of claims 1 to 3 and 9, wherein the control part of the server creates map information of the memorial installation which associates the location of the memorial installation stored in the location information storage part and the user information.

**11.** The augmented reality system according to one of claims 1 to 3, 9 and 10, wherein the control part transmits the information of the location associated with the information of the user to a terminal of the user or other terminal based on the request from the user.

**12.** (Amended) The augmented reality system according to one of claims 1 to 11, wherein the server is comprised of a company information storage part for storing information of a company that provides services and a place of the company in association with one another, and
the portable terminal is configured so that it can transmit information of service request along with the information of the location of the terminal itself detected by the location detecting part to the server, and the control part of the server which received the information on the service request selects information of a company nearest from the location of the portable terminal from the company information storage part and transmits the selected information to the portable terminal.

**13.** The augmented reality system according to one of claims 1 to 12, wherein the control part transmits first confirmation information, which can be responded, to a first user at a predetermined timing, and transmits second confirmation information to a second user different from the first user if there is no response from the portable terminal for the first confirmation information within a predetermined period.

Statement under Art. 19.1 PCT
The content of original claim 10 and [0083] in the specification (last paragraph of p.23) is incorporated into original claims 1 and 4. Further, the content of original claim 10 is replaced with the content of [0085] in the specification (second paragraph of p. 24).
